# EUROPÄISCHE PATENTSCHRIFT

(11) **EP 2 766 704 B1**
(45) Veröffentlichungstag und Bekanntmachung des Hinweises auf die Patenterteilung: **30.09.2015**
(21) Anmeldenummer: 12780452.4
(22) Anmeldetag: 12.10.2012
(51) Int. Cl.: G01L 1/22, G01L 5/16

(54) **MOMENTEN- UND KRAFTAUFNEHMER**
MOMENT-AND-FORCE SENSOR
CAPTEUR DE COUPLE ET DE FORCE

(30) Priorität: 12.10.2011 DE 102011084380
(43) Veröffentlichungstag der Anmeldung: 20.08.2014
(73) Patentinhaber: Technische Universität Berlin, 10623 Berlin (DE)
(72) Erfinder: WULFF, Wulf, 10435 Berlin (DE)
(74) Vertreter: Eisenführ Speiser
(86) Internationale Anmeldenummer: PCT/EP2012/070324
(87) Internationale Veröffentlichungsnummer: WO 2013/053917

(56) Entgegenhaltungen:
- DE-A1- 2 433 223
- US-A- 3 771 359
- US-B1- 6 886 415

## Beschreibung

Die Erfindung betrifft einen Momenten- und Kraftaufnehmer, mit dem beispielsweise zwischen zwei Bauteilen einer Konstruktion herrschende Kräfte oder Biegemomente erfasst werden können.

Eine solche Anordnung ist aus DE 2433223 bekannt. Der Erfindung liegt die Aufgabe zugrunde, einen Momenten- und Kraftaufnehmer zu schaffen, der bei einfachem und kompaktem Aufbau eine möglichst genaue Messwertaufnahme von Kräften und Biegemomenten erlaubt.

Erfindungsgemäß wird diese Aufgabe durch einen Momenten- und Kraftaufnehmer gelöst, der einen einteiligen Grundkörper besitzt, welcher einen Rahmen bildet, der eine zentrale Öffnung einschließt und zwei zueinander versetzte Befestigungsebenen definiert. In jeder Befestigungsebene sind wenigstens drei - vorzugsweise vier - Befestigungspunkte- oder -flächen an entsprechenden Befestigungsabschnitten des Rahmens vorgesehen, die in Umfangsrichtung des Rahmens abwechselnd in einer der beiden Befestigungsebenen angeordnet sind. Der Rahmen verspringt zwischen den Befestigungsabschnitten von einer zur anderen Befestigungsebene und besitzt im unbelasteten Zustand des Moment- und Kraftaufnehmers schräg zu den Befestigungsebenen verlaufende Übergangsabschnitte, die die Befestigungsabschnitte des Rahmens miteinander verbinden und in denen jeweils Messwertaufnehmer zum Erfassen einer Materialdehnung des Rahmens angeordnet sind.

Der erfindungsgemäße Momenten- und Kraftaufnehmer kann sehr flach ausgebildet sein. Seine Funktionalität basiert auf der Verformung von sensitiven, vorzugsweise bogenförmigen Strukturteilen, gebildet von den Übergangsabschnitten, die z.B. mit Dehnungsmessstreifen als Messwertaufnehmer zum Erfassen einer Materialdehnung des Rahmens ausgestattet sind.

Der Momenten- und Kraftaufnehmer besteht vorzugsweise aus einer innen offenen, flächen rechteckigen Konstruktion, an deren Umrandung die Lasteinleitung der einen Seite erfolgt, während sich an den Ecken die Lasteinleitungspunkte der gegenüberliegenden Seite befinden. Desweiteren sind die Übergangsbereiche als Anlenkhebel miteinander verbunden und bogenförmig gestaltet, so dass zum einen Freiräume für elastische Verformungen entstehen, aber auch Bereiche in denen sich die auftretenden Dehnungen gezielt konzentrieren und sich daher sehr gut zum Anbringen von Dehnungsmessstreifen eignen.

Vorzugsweise sind die Messwertaufnehmer zum Erfassen einer Materialdehnung des Rahmens auf äußeren, den Befestigungsebenen zugewandten Oberflächen der Übergangsabschnitte angeordnete Dehnmessstreifen.

Vorzugsweise befinden sich jeweils 4 Befestigungspunkte- oder flächen in der einen Befestigungsebene und jeweils 4 weitere Befestigungspunkte oder -flächen in der jeweils anderen Befestigungsebene, wobei sich jeweils zwei Befestigungspunkte oder -flächen in einer Befestigungsebene paarweise gegenüberliegen.

Gemäß einer besonders bevorzugten Ausführungsvariante des Moment- und Kraftaufnehmers ist der Rahmen in einer Ansicht auf die Befestigungsebenen quadratähnlich oder quadratisch ausgebildet und die 4 Befestigungspunkte oder -flächen sind in der einen Befestigungsebene in Eckbereichen des Rahmens angeordnet während die übrigen 4 Befestigungspunkte oder -flächen in der jeweils anderen Befestigungsebene in mittig zwischen den Eckbereichen befindlichen Kantenbereichen angeordnet sind.

Die Befestigungsabschnitte und die Übergangsabschnitte besitzen in einer Ansicht auf die Befestigungsebenen vorzugsweise jeweils eine gleiche Breite.

Die Übergangsabschnitte besitzen in einem jeweiligen quer zu den Befestigungsebenen verlaufenden Längsschnitt eine sich zur Mitte eines jeweiligen Übergangsabschnitts hin verjüngende Form, so dass die Befestigungsabschnitte in ihrem jeweiligen Mittelbereich dünner sind, als in ihren an die die jeweils anschließenden Befestigungsabschnitte angrenzenden Längsenden. Hierbei verlaufen die den Befestigungsebenen zugewandten Oberflächen der Übergangsabschnitte in deren Längsrichtung vorzugsweise konkav-bogenförmig.

Vorzugsweise sind die Messwertaufnehmer zum Erfassen einer Materialdehnung des Rahmens jeweils an einem Innen- oder Außenrand der den Befestigungsebenen zugewandten Oberflächen der Übergangsabschnitte angeordnet. Insbesondere ist es bevorzugt, dass auf den einer ersten Befestigungsebene zugewandten Oberflächen der Übergangsabschnitte an deren Außenrand jeweils ein Messwertaufnehmer zum Erfassen einer Materialdehnung des Rahmens angeordnet ist, wobei vorzugsweise auf den einer zweiten Befestigungsebene zugewandten Oberflächen der Übergangsabschnitte an deren Innenrand jeweils zwei in Längsrichtung des jeweiligen Übergangsabschnitts zueinander beabstandete Messwertaufnehmer zum Erfassen einer Materialdehnung des Rahmens angeordnet sind.

Alle aufgebrachten Dehnungsmessstreifen sind im Anwendungsfall vorzugsweise in einer Vollbrückenschaltung miteinander verbunden. Wirkt nun ein Moment um die x- bzw. y-Achse, so werden die zu dieser Achse parallel angeordneten Übergangsbereiche als Anlenkhebel auf der Zugseite angehoben und auf der Druckseite abgesenkt. Zusätzlich zu den Dehnungsmessstreifen in den Freiräumen der Anlenkhebel befinden sich auch auf der andren Flachseite der Übergangsabschnitte weitere Dehnungsmessstreifen, die eine separierte Messung der Axialkraft zulassen.

In seiner bevorzugten Ausführungsform erlaubt der Sensor die gleichzeitige Erfassung der Momente um die x- und y-Achse in der Ebene sowie die Erfassung der Axialkraft in der z-Richtung.

Der erfindungsgemäße Kräfte- und Momentenaufnehmer erlaubt eine Kraft- und Momentenmessung in vielfältigen Anwendungsgebieten, in denen herkömmliche Messgeräte auf Grund geringer Einbauhöhen nur bedingt anwendbar sind. Als mögliche Anwendungsgebiete können Messungen an Sportgeräten, Straßen- und Schienenfahrzeugen oder auch Baumaschinen gesehen werden. Bei diesen mussten bisher 4 einzelne kraftmesssensoren verwendet werden, die nun durch eine einzelne in der Erfindung beschriebene flache, rechteckige Messplatte ersetzt werden können.

Die Erfindung soll nun anhand eines Ausführungsbeispiels mit Bezug auf die Figuren näher erläutert werden. Diese zeigen in:

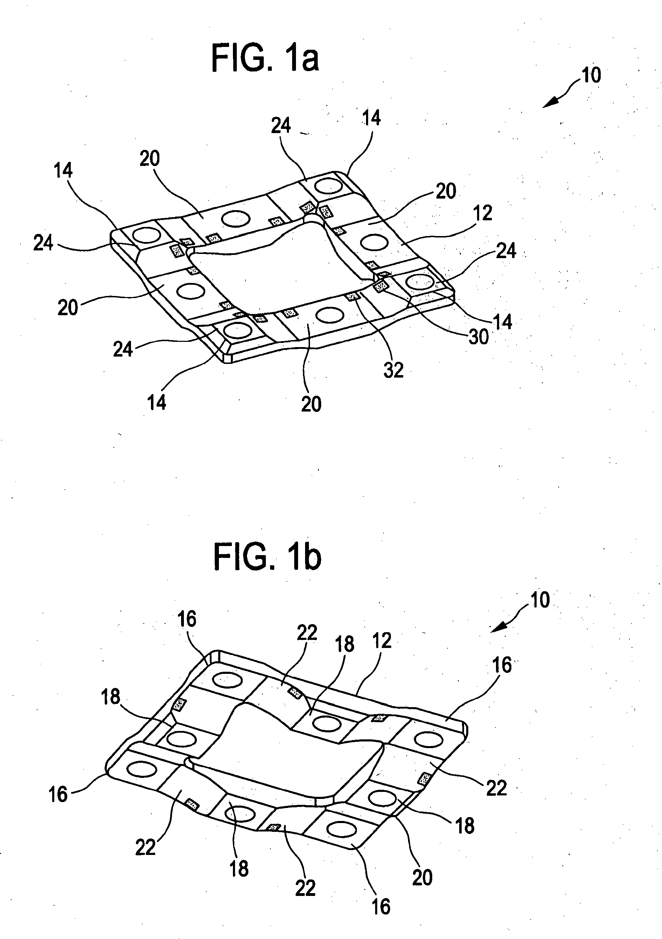

- Fig. 1a: eine perspektivische Sicht auf eine erste Flachseite eines erfindungsgemäßen Kräfte- und Momentenaufnehmers;
- Fig. 1 b: eine perspektivische Ansicht auf eine zweite, der ersten Flachseite gegenüberliegende Flachseite des erfindungsgemäßen Kräfte- und Momentenaufnehmers;
- Fig. 2: eine Aufsicht auf die zweite Flachseite des erfindungsgemäßen Kräfte- und Momentenaufnehmers.

Wie den Figuren zu entnehmen ist, besitzt der in den Figuren abgebildete, erfindungsgemäße Kräfte- und Momentenaufnehmer 10 einen einteiligen Grundkörper 12, welcher einen Rahmen bildet, der eine zentrale Öffnung einschließt und zwei zueinander versatzte Befestigungsebenen definiert. Der Rahmen (Grundkörper 12) besitzt in einer Ansicht auf die Befestigungsebenen beziehungsweise die Flachseiten eine rechteckige - im Ausführungsbeispiel quadratische - Grundform mit abgerundeten Ecken. Auch die vom Grundkörper 12 eingeschlossene Öffnung ist rechteckig mit abgerundeten Ecken.

Auf einer Flachseite des Grundkörpers 12 sind erste Befestigungsabschnitte 14 in Eckbereichen 16 des Rahmens angeordnet, die sämtlich in einer ersten Befestigungsebene liegen. Auf der zweiten, der ersten Flachseite gegenüberliegenden Flachseite des Rahmens (siehe Fig. 1b) sind Befestigungsabschnitte 18 in Kantenbereichen 20 des Rahmens angeordnet und definieren eine zweite Befestigungsebene. Zwischen den ersten Befestigungsabschnitten 14 und den zweiten Befestigungsabschnitten 18 verspringt der Rahmen von einer Ebene zur anderen Ebene. Zwischen den ersten Befestigungsabschnitten 14 und den zweiten Befestigungsabschnitten 18 sind Übergangsabschnitte 22 angeordnet, die in Bezug auf die Befestigungsebenen schräg verlaufen und die ersten und zweiten Befestigungsabschnitte paarweise miteinander verbinden, so dass sich ein geschlossener Umlauf, rahmenförmiger Grundkörper 12 ergibt.

Die Befestigungsabschnitte 14 und 18 besitzen jeweils Befestigungsflächen 24 bzw. 26 mit jeweils mittig in den Befestigungsflächen angeordneten Durchgangsbohrungen 28 als Befestigungspunkten.

Die Befestigungsflächen 24 an den ersten Befestigungsabschnitten 14 sind dabei von den Befestigungsflächen 26 an den zweiten Befestigungsabschnitten 18 abgewandt.

Die Übergangsabschnitte 22 verbinden die Befestigungsabschnitte 18 in den Kantenbereichen 20 mit den Befestigungsabschnitten 14 in den Eckbereichen des Rahmens. Dadurch, dass die Übergangsabschnitte 22 schräg zu den beiden Befestigungsebenen verlaufen, ergibt sich, dass sich auf einer einer jeweiligen Befestigungsfläche 24 bzw. 26 abgewandten Seite des entsprechenden Befestigungsabschnittes 14 oder 18 ein Freiraum ergibt, so dass sich ein in der ersten Befestigungsebene über die Befestigungsfläche 24 an den ersten Befestigungsabschnitten 14 an dem Grundkörper 12 befestigter Gegenstand unter Verformung der als Anlenkhebel dienenden Übergangsabschnitte 22 im Rahmen der Materialverformung des Grundkörpers 12 geringfügig gegenüber einem zweiten Gegenstand bewegen kann, der in der zweiten Befestigungsebene über die Befestigungsflächen 26 an den zweiten Befestigungsabschnitten 18 befestigt ist.

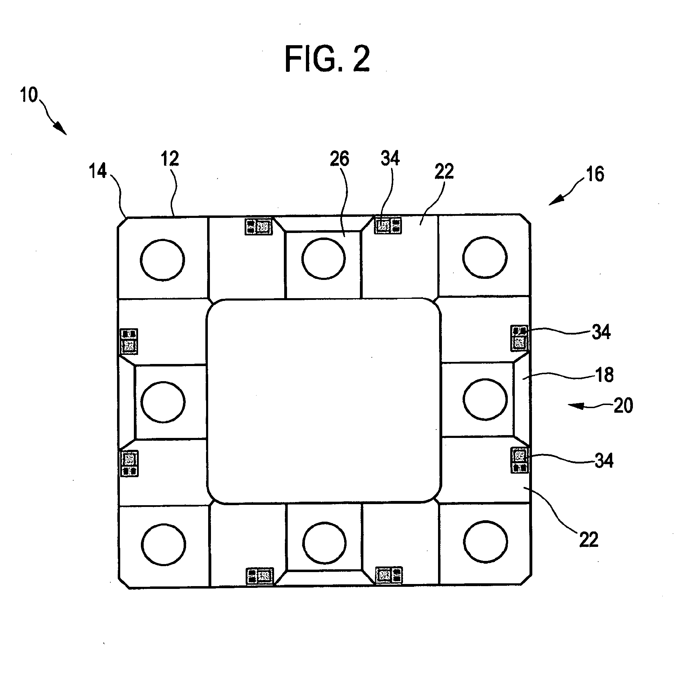

Die Übergangsabschnitte 22 haben in der Draufsicht (siehe Fig. 2) die gleiche Breite wie die ersten und zweiten Befestigungsabschnitte 14 bzw. 18 und die in Richtung der Befestigungsebenen weisenden Außenflächen der Übergangsabschnitte 22 sind in Längsrichtung jeweils konkav geformt, so dass die Übergangsabschnitte 22 dort, wo sie an die benachbarten Befestigungsabschnitte angrenzen, eine größere Materialdicke aufweisen als dazwischen. Auf den konkav gebogenen Flachseiten der Übergangsabschnitte 22 sind Messstreifen als Messwertaufnehmer zum Erfassen einer Materialdehnung des Rahmens angeordnet. Wie Fig. 1a zeigt, sind auf der dort abgebildeten, der ersten Befestigungsebene zugewandten Seite des Momenten- und Kraftaufnehmers zwischen jeweiligen ersten und zweiten Befestigungsabschnitten jeweils zwei Dehnmessstreifen 30 und 32 vorgesehen, die nahe der der zentralen Öffnung im Grundkörper 12 zugewandten Innenkante des jeweiligen Übergangsabschnitts 22 angeordnet sind.

Auf der der zweiten Befestigungsebene zugewandten Seite des Grundkörpers 12, die in Fig. 1b abgebildet ist, ist zwischen jeweils zwei benachbarten Befestigungsabschnitten 14 bzw. 18 im Bereich der konkav geformten Oberfläche des entsprechenden Übergangsabschnitts 22 jeweils nur ein Dehnmessstreifen 34 angeordnet, und zwar in der Nähe einer jeweiligen Außenkante der Oberfläche des entsprechenden Übergangsabschnitts 22.

Fig. 1a und 1b zeigen, wie gering die Bauhöhe des erfindungsgemäßen Momenten- und Kraftaufnehmers ist. Im Einsatzfall liegt der Momenten- und Kraftaufnehmer im Kraftfluss und liefert Messwerte, die auf der Verformung seiner Übergangsabschnitte 22 als sensitiven bogenförmigen Strukturteilen basiert, die mit Dehnmessstreifen ausgestattet sind.

Der Momenten- und Kraftaufnehmer 10 ist eine innen offenen flache rechteckige Konstruktion, an deren Umrandung sich mittig die Lasteinleitungen der einen Seite und an deren Ecken sich die Lasteinleitungspunkte der gegenüberliegenden Seite befinden. Durch die bogenförmige Gestalt der verbundenen Anlenkhebel 22 entstehen sowohl Freiräume für die elastische Verformung, als auch gezielte Dehnungskonzentrationen an Orten die für die Platzierung der Dehnmessstreifen geeignet und dehnungsgemäß optimiert sind. Wirkt ein Moment um die x- bzw. um die y-Achse, so werden die zu dieser Achse parallel angeordneten Hebel auf der Zugseite angehoben und auf der Druckseite abgesenkt. Alle vier beteiligten Hebel sind mit jeweils einem Dehnmessstreifen ausgestattet, die zu einer Vollbrücke zusammengeschaltet werden. Durch die Vollbrückenschaltung wird das um die jeweils andere Achse (y-Achse bzw. x-Achse) wirkende Moment ausgeblendet, wodurch ein Übersprechen unterbunden wird. Desweiteren befindet sich auf der Oberseite des jeweiligen Übergangsabschnitts 22 als Sensoranlenkhebel eine weitere Dehnmessstreifen-Konfiguration, die es erlaubt, separiert die Axialkraft zu erfassen.

Aufgrund der Bauform ist der Momenten- und Kraftaufnehmer besonders platzsparend in der Aufbauhöhe, da die Anschlusspunkte der einen Seite auf den Ecken liegen und die Anschlusspunkte der Gegenseite auf den Mittelpunkten der Seiten. Durch die bogenförmige Gestalt der verbundenen Anlenkhebel entstehen dabei überlappende Freiräume für die Köpfe der Befestigungsschrauben, wodurch die flache Bauweise ermöglicht wird. Darüber hinaus kann die Konstruktion leicht den jeweiligen Last- und Größenanforderungen angepasst werden, indem Materialstärke, Radien oder Gesamtgröße variiert werden. In der Mitte des Sensors ist außerdem Platz für Verkabelung und Messverstärker, was eine robuste Auslegung ermöglicht.

Der Momenten- und Kraftaufnehmer erlaubt die Erfassung der Momente um die x- und y-Achse in einer zu den Befestigungsebenen parallelen Ebene sowie die Erfassung der Axialkraft in der z-Richtung senkrecht zu den Befestigungsebenen. In der abgebildeten Variante kann der Sensor Momente bis 500 Nm mit einer Genauigkeit von 5 Nm erfassen und eine Axialkraft von 2000 N mit einer Genauigkeit von 10 N. Die Abmessungen betragen hierfür zweckgebunden 95x90x12,5 mm.

## Patentansprüche

1. Moment- und Kraftaufnehmer mit einem einteiligen Grundkörper, welcher einen Rahmen bildet, der eine zentrale Öffnung einschließt und zwei zueinander versetzte Befestigungsebenen definiert, wobei in jeder Befestigungsebene wenigstens drei Befestigungspunkte- oder -flächen an entsprechenden Befestigungsabschnitten des Rahmens vorgesehen sind, die in Umfangsrichtung des Rahmens abwechselnd in einer der beiden Befestigungsebenen angeordnet sind, und wobei der Rahmen zwischen den Befestigungsabschnitten (14, 18) von einer zur anderen Befestigungsebene verspringt **dadurch gekennzeichnet, daß** der Rahmen in unbelastetem Zustand des Moment- und Kraftaufnehmers schräg zu den Befestigungsebenen verlaufende Übergangsabschnitte (22) aufweist, in denen jeweils Messwertaufnehmer zum Erfassen einer Materialdehnung des Rahmens angeordnet sind.

2. Moment- und Kraftaufnehmer nach Anspruch 1, **dadurch gekennzeichnet, dass** die Messwertaufnehmer zum Erfassen einer Materialdehnung des Rahmens auf äußeren, den Befestigungsebenen zugewandten Oberflächen der Übergangsabschnitte (22) angeordnete Dehnmessstreifen (30, 32, 34) sind.

3. Moment- und Kraftaufnehmer nach Anspruch 1 oder 2, **dadurch gekennzeichnet, dass** der Rahmen 4 Befestigungspunkte- oder flächen (24) in der einen Befestigungsebene und 4 Befestigungspunkte oder -flächen in der jeweils anderen Befestigungsebene (26) definiert, wobei sich jeweils zwei Befestigungspunkte oder - flächen (24, 26) in einer Befestigungsebene paarweise gegenüberliegen.

4. Moment- und Kraftaufnehmer nach Anspruch 3, **dadurch gekennzeichnet, dass** der Rahmen in einer Ansicht auf die Befestigungsebenen quadratähnlich oder quadratisch ausgebildet ist und die 4 Befestigungspunkte oder -flächen (24, 26) in der einen Befestigungsebene in Eckbereichen (16, 18) des Rahmens angeordnet sind während die übrigen 4 Befestigungspunkte oder -flächen (24, 26) in der jeweils anderen Befestigungsebene in mittig zwischen den Eckbereichen (16, 18) befindlichen Kantenbereichen (20) angeordnet sind.

5. Moment- und Kraftaufnehmer nach einem der Ansprüche 1 bis 4, **dadurch gekennzeichnet, dass** die Befestigungsabschnitte (14, 18) und die Übergangsabschnitte (22) in einer Ansicht auf die Befestigungsebenen jeweils eine gleiche Breite besitzen.

6. Moment- und Kraftaufnehmer nach einem der Ansprüche 1 bis 5, **dadurch gekennzeichnet, dass** die Übergangsabschnitte (22) in einem jeweiligen quer zu den Befestigungsebenen verlaufenden Längsschnitt eine sich zur Mitte eines jeweiligen Übergangsabschnitts (22) hin verjüngende Form besitzen, so dass die Befestigungsabschnitte (14, 18) in ihrem jeweiligen Mittelbereich dünner sind, als in ihren an die die jeweils anschließenden Befestigungsabschnitte (14, 18) angrenzenden Längsenden.

7. Moment- und Kraftaufnehmer nach Anspruch 6, **dadurch gekennzeichnet, dass** die den Befestigungsebenen zugewandten Oberflächen der Übergangsabschnitte (22) in deren Längsrichtung konkav-bogenförmig verlaufen.

8. Moment- und Kraftaufnehmer nach einem der Ansprüche 1 bis 7, **dadurch gekennzeichnet, dass** die Messwertaufnehmer zum Erfassen einer Materialdehnung des Rahmens jeweils an einem Innen- oder Außenrand der den Befestigungsebenen zugewandten Oberflächen der Übergangsabschnitte (22) angeordnet sind.

9. Moment- und Kraftaufnehmer nach Anspruch 8, **dadurch gekennzeichnet, dass** auf den einer ersten Befestigungsebene zugewandten Oberflächen der Übergangsabschnitte (22) an deren Außenrand jeweils ein Messwertaufnehmer zum Erfassen einer Materialdehnung des Rahmens angeordnet ist.

10. Moment- und Kraftaufnehmer nach Anspruch 8 oder 9, **dadurch gekennzeichnet, dass** auf den einer zweiten Befestigungsebene zugewandten Oberflächen der Übergangsabschnitte (22) an deren Innenrand jeweils zwei in Längsrichtung des jeweiligen Übergängsabschnitts (22) zueinander beabstandete Messwertaufnehmer zum Erfassen einer Materialdehnung des Rahmens angeordnet sind.

## Claims

1. Torque and force transducer with a single-component base body, which forms a frame including a central opening and defines two fitting levels offset from each other, whereby at least three fitting points or surfaces are provided on each fitting level at corresponding fitting sections of the frame, the same arranged in a circumferential direction of the frame alternating on one of the two fitting levels, and whereby the frame is offset between the fitting levels (14, 18) from one to the other fitting level, **characterised in that** the frame comprises transition sections (22) extending diagonally to the fitting levels in an unloaded condition of the torque and force transducer, in each of which sensors for sensing a material expansion of the frame are arranged.

2. Torque and force transducer according to claim 1, **characterised in that** the sensors for sensing a material expansion of the frame are strain gauges (30, 32, 34) arranged on outer surfaces of the transition sections (22) facing the fitting levels.

3. Torque and force transducer according to claim 1 or 2, **characterised in that** the frame defines 4 fitting points or surfaces (24) on one fitting level, and 4 fitting points or surfaces on the relevant other fitting level (26), whereby two fitting points or surfaces (24, 26) are each arranged opposite each other in pairs on one fitting level.

4. Torque and force transducer according to claim 3, **characterised in that** the frame is designed rectangular-like or rectangular when viewed onto the fitting levels, and the 4 fitting points or surfaces (24, 26) are arranged in corner areas (16, 18) of one fitting level, whilst the remaining 4 fitting points or surfaces (24, 26) are arranged on the relevant other fitting level in edge areas (20) located centrally between the corner areas (16, 18).

5. Torque and force transducer according to one of the claims 1 to 4, **characterised in that** the fitting sections (14, 18) and the transition sections (22) each have the same width when viewed onto the fitting levels.

6. Torque and force transducer according to one of the claims 1 to 5, **characterised in that** the transition sections (22) have a shape that is tapered towards the middle of each relevant transition section (22) along a longitudinal section extending transverse to each of the fitting levels, so that the fitting sections (14, 18) are thinner in their relevant middle area than at their longitudinal side adjacent to the relevant following fitting section (14, 18).

7. Torque and force transducer according to claim 6, **characterised in that** the surfaces of the transition sections (22) facing the fitting levels extend in a concave arc along their longitudinal direction.

8. Torque and force transducer according to one of the claims 1 to 7, **characterised in that** the sensors for sensing a material expansion of the frame are each arranged on an inner or outer edge of the surfaces of the transition sections (22) facing the fitting levels.

9. Torque and force transducer according to claim 8, **characterised in that** one sensors for sensing a material expansion of the frame each is arranged at the outer edge of the surface of the transition sections (22) facing a first fitting level.

10. Torque and force transducer according to claim 8 or 9, **characterised in that** two sensors for sensing a material expansion of the frame are each arranged on the inner edge of the surfaces of the transition sections (22) facing a second fitting level, spaced apart from each other in a longitudinal direction of the relevant transition section (22).

## Revendications

1. Capteur de couple et de force avec un corps de base constitué d'une seule pièce qui forme un cadre entourant une ouverture centrale et définissant deux plans de fixation, au moins trois points ou surfaces de fixation étant prévus dans chaque plan de fixation sur des parties de fixation du cadre disposées dans un des deux plans de fixation de manière alternée dans la direction périphérique du cadre, et où le cadre passe d'un plan de fixation à l'autre entre les parties de fixation (14, 18), **caractérisé en ce que** le cadre présente des segments de passage (22) s'étendant obliquement par rapport aux plans de fixation en état de décharge du capteur de couple et de force, dans chacun desquels est disposé un capteur de mesure destiné à détecter une dilatation de matériau du cadre.

2. Capteur de couple et de force selon la revendication 1, **caractérisé en ce que** les capteurs de mesure destinés à détecter une dilatation de matériau du cadre sont des extensomètres (30, 32, 34) disposés sur des surfaces extérieures, opposées aux plans de fixation, des segments de passage (22).

3. Capteur de couple et de force selon la revendication 1 ou 2, **caractérisé en ce que** le cadre définit 4 points ou surfaces de fixation (24) dans un premier plan de fixation et 4 points ou surfaces de fixation dans l'autre plan de fixation (26), deux points ou surfaces de fixation (24, 26) étant opposés en paire dans chaque plan de fixation.

4. Capteur de couple et de force selon la revendication 3, **caractérisé en ce que**, en vue sur les plans de fixation, le cadre est de forme carrée ou sensiblement carrée et les 4 points ou surfaces de fixation (24, 26) du premier plan de fixation sont disposés dans des zones de coin (16, 18) du cadre, alors que les 4 autres points ou surfaces de fixation (24, 26) de l'autre plan de fixation sont disposés dans des zones de bord (20) centrales entre les zones de coin (16, 18).

5. Capteur de couple et de force selon l'une des revendications 1 à 4, **caractérisé en ce que**, en vue sur les plans de fixation, les parties de fixation (14, 18) et les segments de passage (22) ont une largeur identique.

6. Capteur de couple et de force selon l'une des revendications 1 à 5, **caractérisé en ce que**, en coupe longitudinale transversalement aux plans de fixation, chaque segment de passage (22) a une forme qui s'effile vers le milieu du segment de passage (22), si bien que les parties de fixation (14, 18) sont plus étroites dans leur partie centrale qu'à leurs extrémités longitudinales contiguës aux parties de fixation (14, 18) adjacentes respectives.

7. Capteur de couple et de force selon la revendication 6, **caractérisé en ce que** les surfaces des segments de passage (22) opposées aux plans de fixation ont une extension longitudinale en forme d'arc concave.

8. Capteur de couple et de force selon l'une des revendications 1 à 7, **caractérisé en ce que** les capteurs de mesure destinés à détecter une dilatation de matériau du cadre sont disposés sur un bord intérieur ou extérieur des surfaces des segments de passage (22) opposées aux plans de fixation.

9. Capteur de couple et de force selon la revendication 8, **caractérisé en ce qu'**un capteur de mesure destiné à détecter une dilatation de matériau du cadre est disposé sur le bord extérieur de chaque surface de segment de passage (22) opposée à un premier plan de fixation.

10. Capteur de couple et de force selon la revendication 8 ou 9, **caractérisé en ce que** deux capteurs de mesure destinés à détecter une dilatation de matériau du cadre, espacés l'un de l'autre dans le sens de la longueur du segment de passage (22) respectif, sont disposés sur le bord intérieur de chaque surface de segment de passage (22) opposée à un deuxième plan de fixation.
